# FASCICULE DE BREVET EUROPEEN

(11) **EP 1 826 030 B1**
(45) Date de publication et mention de la délivrance du brevet: **25.04.2012**
(21) Numéro de dépôt: 07002155.5
(22) Date de dépôt: 01.02.2007
(51) Int. Cl.: B60C 23/04

(54) **Procédé de transmission d'un signal électromagnétique de requête d'identification à destination d'un boîtier électronique monté sur une roue d'un véhicule**
Verfahren zur Übertragung eines elektromagnetischen Signals zur Identifikationsanforderung an ein elektronisches Gehäuse, das auf einem Rad eines Fahrzeugs montiert ist
Method of transmitting an electromagnetic identification request signal to a pressure monitoring module installed on the wheel of a vehicle

(30) Priorité: 28.02.2006 FR 0601731
(43) Date de publication de la demande: 29.08.2007
(73) Titulaire: Continental Automotive France, 31100 Toulouse (FR)
(72) Inventeur: Costes, Olivier, 31270 Cugnaux (FR); Garnier, Héléne, 31400 Toulouse (FR)
(74) Mandataire: Bonn, Roman Klemens

(56) Documents cités:
- EP-A2- 1 462 278
- EP-A2- 1 484 200
- WO-A-02/051654

## Description

L'invention concerne un procédé de transmission d'un signal électromagnétique de requête d'identification généré au moyen d'une antenne connectée à une unité centrale montée sur un véhicule, à destination d'un boîtier électronique monté sur une roue du dit véhicule.

De plus en plus de véhicules automobiles possèdent, à des fins de sécurité, des systèmes de surveillance comportant des capteurs montés sur chacune des roues du véhicule, dédiés à la mesure de paramètres, tels que pression ou température des pneumatiques équipant ces roues, et destinés à informer le conducteur de toute variation anormale du paramètre mesuré.

Ces systèmes de surveillance sont classiquement dotés d'un boîtier électronique monté sur chacune des roues du véhicule, intégrant, outre les capteurs précités, un microprocesseur et un émetteur radiofréquence (ou émetteur RF), et d'une unité centrale de réception des signaux émis par les émetteurs, comportant un calculateur intégrant un récepteur radiofréquence (ou récepteur RF) connecté à une antenne.

Un des problèmes que nécessitent de résoudre de tels systèmes de surveillance réside dans l'obligation de devoir associer à chaque signal reçu par le récepteur de l'unité centrale, une information concernant la localisation du boîtier électronique et donc de la roue à l'origine de ce signal, cette obligation perdurant pendant la durée de vie du véhicule, c'est à dire devant être respectée même après des changements de roues ou plus simplement des inversions de la position de ces roues.

A l'heure actuelle, une première méthode de localisation consiste à utiliser trois antennes basse fréquence positionnées chacune à proximité immédiate d'une des roues du véhicule, et à effectuer une procédure de localisation consistant à exciter successivement chacune de ces trois antennes par l'émission d'un champ magnétique basse fréquence.

Selon cette procédure, le boîtier électronique monté sur la roue située à proximité de l'antenne excitée commande, en réponse et à destination de l'unité centrale, l'émission d'un signal basse fréquence comportant un code d'identification du dit boîtier, de sorte que l'excitation successive des trois antennes conduit à la localisation des trois boîtiers montés sur les roues jouxtant ces antennes, et par déduction, à la localisation du quatrième boîtier.

Un procédé tel que décrit par le préambule de la revendication 1 est connu de EP 1 484 200 A2.

Le principal avantage d'un tel procédé réside dans le fait que la procédure de localisation est très rapide et conduit à une localisation quasi-instantanée après le démarrage du véhicule.

Par contre, cette solution impose d'équiper le véhicule de trois antennes avec toutes les sujétions afférentes : câbles de connexion, amplificateurs de commande, de sorte qu'elle s'avère coûteuse.

Cet inconvénient relatif au coût d'installation des moyens de mise en oeuvre du procédé de localisation peut être résolu lorsque le véhicule est équipé d'un dispositif d'accès mains libres destiné à permettre d'accéder au dit véhicule et de démarrer ce dernier.

En effet, la solution consiste alors, tel que notamment décrit dans la demande de brevet WO 02/051654, à utiliser les antennes émettrices de ce dispositif d'accès mains libres montées sur le véhicule, pour mettre en oeuvre la procédure de localisation des roues.

Tel que décrit dans la demande de brevet précitée, la mise en oeuvre de cette solution consiste, par exemple, à commander l'émission par les antennes émettrices d'un signal non codé lorsque les dites antennes sont utilisées en vue de la localisation des roues, et à commander l'émission d'un signal codé lors de l'utilisation des antennes à leur fin originale de contrôle de l'accès au véhicule.

Une telle solution s'avère toutefois présenter un inconvénient majeur résultant du fait que les antennes des dispositifs d'accès mains libres ne sont pas positionnées de façon idéale en vue de permettre la localisation des roues d'un véhicule.

En effet, le positionnement des antennes, conçu pour optimiser le fonctionnement du système d'accès mains libres, conduit à la création, lors de la rotation des roues et donc des boîtiers électroniques équipant ces dernières, de zones angulaires de non réception, par ces boîtiers électroniques, des signaux émis par ces antennes.

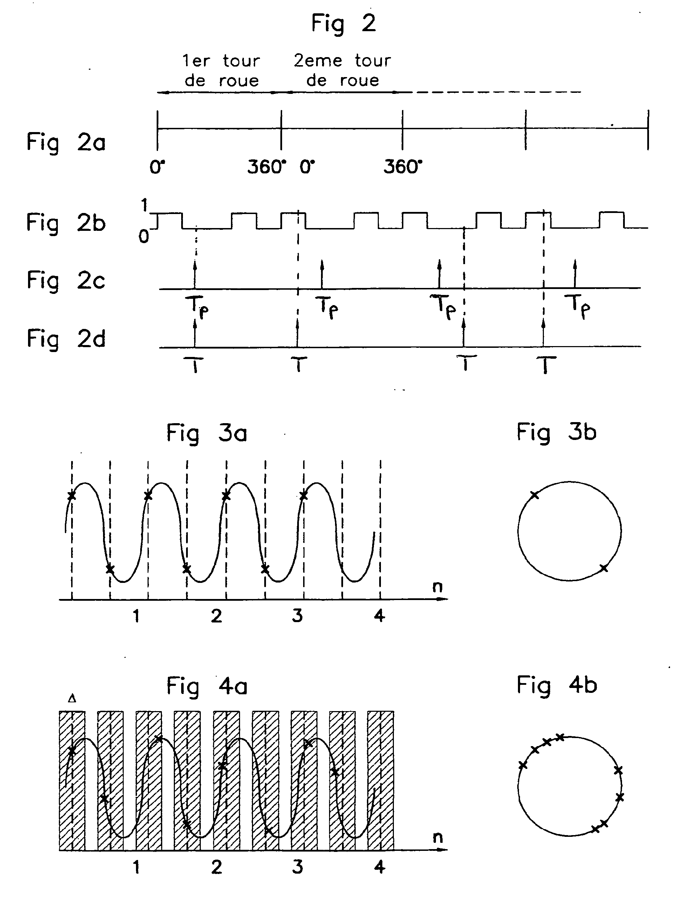

L'existence de ces zones de non réception ressort de l'analyse des figures 2a et 2b qui illustrent les résultats de mesures de réception, par un boîtier électronique monté sur une roue avant droite d'un véhicule, des signaux électromagnétiques émis de façon périodique par une antenne montée sur la poignée de la porte avant droite de ce véhicule. En vue de cette illustration, ces figures représentent respectivement, en projection sur un axe horizontal :
- la trajectoire parcourue par un boîtier électronique monté sur une roue, (figure 2a),
- et les zones correspondantes (niveau 0 du signal représenté à la figure 2b) de non réception par ce boîtier des signaux électromagnétiques émis par l'antenne.

Il ressort clairement de ces figures que le boîtier électronique objet du test effectué, se trouve, à des moments donnés, situé dans des zones de non réception des signaux émis par l'antenne chargée d'émettre les signaux de requête d'identification à destination du dit boîtier.

De ce fait la réception des signaux d'identification par les boîtiers électroniques devient hypothétique, et il est impossible de maîtriser le temps nécessaire pour effectuer une procédure complète de localisation des roues, voire même de garantir l'aboutissement de cette procédure.

La présente invention vise à pallier cet inconvénient et a pour principal objectif de fournir un procédé de transmission très performant en termes de réactivité et de fiabilité.

A cet effet, l'invention vise un procédé de transmission d'un signal électromagnétique de requête d'identification généré au moyen d'une antenne connectée à une unité centrale montée sur un véhicule, à destination d'un boîtier électronique monté sur une roue du dit véhicule, ce procédé de transmission :
- consistant à émettre successivement, après démarrage du véhicule, une pluralité de signaux identiques (S1..., Si, Si+1,...) de requête d'identification,
- et se caractérisant en ce qu'il consiste à déclencher les signaux successifs avec des intervalles de temps présentant des durées variables établies par une méthode de détermination aléatoire.

Il est à noter que selon l'invention, par signal électromagnétique, on entend englober de façon générale les signaux basse fréquence « LF » et les signaux radiofréquences « RF ».

Le procédé de transmission selon l'invention permet de s'affranchir des problèmes posés par les zones de non réception par la mise en oeuvre d'une méthode de détermination aléatoire adaptée pour faire varier les intervalles de temps séparant les émissions successives des signaux électromagnétiques.

Un tel procédé qui consiste à réaliser un décalage temporel aléatoire entre les déclenchements successifs d'un signal de requête d'identification, conduit, en effet, à décaler la position angulaire relative d'un boîtier électronique par rapport à l'antenne émettrice associée au dit boîtier, et garantit ainsi, de façon régulière et avec une fréquence élevée, un positionnement de ce boîtier électronique dans une zone de réception, et par conséquent un aboutissement rapide de la procédure de localisation.

De plus, une telle solution consiste en une solution purement « logicielle » de sorte qu'elle n'engendre aucun surcoût de production.

Enfin, le procédé de transmission selon l'invention occultant le problème des zones de non réception, il permet de garantir une localisation rapide des roues d'un véhicule en utilisant, en vue de l'émission des signaux de requête d'identification, les antennes du dispositif d'accès mains libres équipant ce véhicule.

Selon un premier mode de mise en oeuvre avantageux de l'invention, on détermine les durées des intervalles de temps par un calcul aléatoire utilisant une variable dynamique comme variable de base du dit calcul aléatoire.

Cette première solution consiste à mettre en oeuvre un calcul aléatoire de type classique connu en soi, en utilisant comme variable de base une variable dynamique.

Selon un second mode de mise en oeuvre avantageux de l'invention, on détermine les durées des intervalles de temps par une méthode de calcul pseudo aléatoire consistant à choisir de façon aléatoire une valeur parmi un nombre prédéterminé de valeurs présélectionnées de durées.

De plus, quel que soit le mode de calcul aléatoire précité mis en oeuvre, le procédé de transmission selon l'invention consiste avantageusement à déterminer les durées des intervalles de temps en ajoutant à une période de temps fixe prédéterminée une durée aléatoire établie par une méthode de détermination aléatoire.

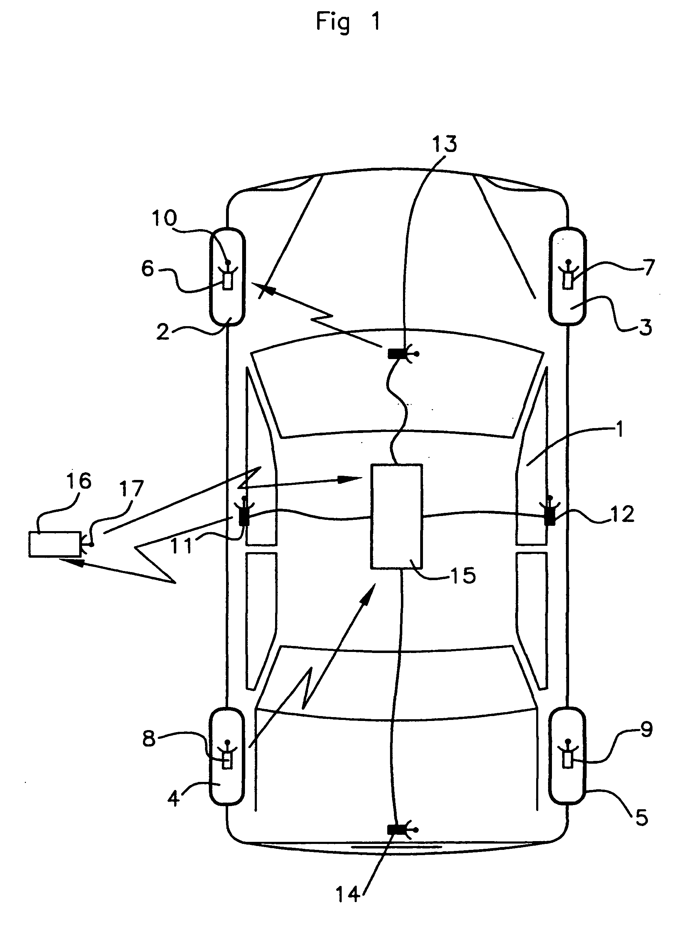

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :
- **la** **figure 1** est une vue de dessus schématique d'un véhicule doté d'un système de surveillance comportant un dispositif de localisation des roues du dit véhicule mettant en oeuvre le procédé de transmission selon l'invention,
- **les** **figures 2a à 2d** sont quatre graphiques destinés à illustrer le procédé de transmission mis en oeuvre conformément à l'invention, et permettant de comparer, pour une vitesse constante de véhicule, les résultats obtenus lors de la mise en oeuvre de ce procédé, illustrés à la figure 2d, avec les résultats obtenus lors d'émissions périodiques des signaux électromagnétiques,
- **les** **figures 3a et 3b** consistent en deux autres représentations graphiques illustrant les résultats obtenus, pour une vitesse constante de véhicule, lors d'émissions périodiques des signaux électromagnétiques,
- **et les** **figures 4a et 4b** consistent en deux représentations graphiques similaires à celles des figures 3a et 3b, illustrant les résultats obtenus lors de la mise en oeuvre du procédé de l'invention.

Le système de surveillance mettant en oeuvre le procédé de transmission selon l'invention est représenté, sur la figure 1, monté sur un véhicule 1 muni de quatre roues chaussées classiquement d'un pneumatique : deux roues avant 2, 3 et deux roues arrière 4, 5.

De tels systèmes de surveillance comportent classiquement, en premier lieu, associé à chaque roue 2-5, un boîtier électronique 6-9, par exemple solidarisé sur la jante de la dite roue de façon à être positionné à l'intérieur de l'enveloppe du pneumatique.

Chacun de ces boîtiers électroniques 6-9 intègre par exemple des capteurs dédiés à la mesure de paramètres, tels que pression et/ou température du pneumatique, connectés à un microprocesseur possédant un code d'identification du dit boîtier, et relié à un émetteur RF connecté à une antenne basse fréquence telle que 10.

Le système de surveillance comprend, également, un calculateur centralisé ou unité centrale 15 comportant un microprocesseur et intégrant un récepteur RF apte à recevoir les signaux émis par chacun des quatre boîtiers électroniques 6-9, et connecté, à cet effet, à une antenne (non représentée).

De façon usuelle, un tel système de surveillance et notamment son unité centrale 15 sont conçus de façon à informer le conducteur de toute variation anormale des paramètres mesurés par les capteurs associés aux roues 2-5.

Le dispositif de surveillance selon l'invention comprend également des antennes émettrices 11-14 connectées à l'unité centrale 15 et constituées des antennes d'un dispositif usuellement connu sous l'appellation « dispositif d'accès mains libres », adapté pour permettre d'accéder au véhicule 1 et de démarrer ce dernier grâce à l'identification d'un badge électronique 16.

Conformément aux dispositions d'un tel dispositif d'accès mains libres, ces antennes sont au nombre de quatre et consistent respectivement en :
- une antenne gauche 11 positionnée sur la poignée de la porte avant gauche du véhicule,
- une antenne droite 12 positionnée sur la poignée de la porte avant droite du véhicule,
- une antenne avant 13 positionnée au niveau du tableau de bord du véhicule,
- et une antenne arrière 14 positionnée sur la poignée de la porte du coffre du véhicule.

Le badge électronique 16 de ce système d'accès mains libres comprend, quant à lui, classiquement un calculateur intégrant un récepteur basse fréquence « LF » et un émetteur radio fréquence « RF » connectés à des antennes telles que 17.

De façon usuelle, et en vue de la localisation des roues 2-5 du véhicule 1, l'unité centrale 15 est programmée, après démarrage du dit véhicule et pour chacune des antennes 11-14 utilisées en vue de cette localisation, pour émettre n signaux électromagnétiques successifs identiques de requête d'identification S1,...Si, Si+1,...Sn.

Selon l'invention, ces n signaux successifs sont émis avec des intervalles de temps présentant des durées variables établies par une méthode de détermination aléatoire.

De façon plus précise, la durée de ces intervalles de temps est obtenue en ajoutant à une période de temps fixe prédéterminée une durée aléatoire établie par une méthode de détermination aléatoire.

De plus, cette méthode de détermination aléatoire peut consister, selon l'invention, à déterminer les durées aléatoires des intervalles de temps :
- soit par un calcul aléatoire utilisant une variable dynamique comme variable de base du dit calcul aléatoire,
- soit par une méthode de calcul pseudo aléatoire consistant à choisir de façon aléatoire une valeur parmi un nombre prédéterminé de valeurs présélectionnées de durées.

Ainsi, à titre d'exemples numériques:
- chaque période de temps fixe peut présenter un ordre de grandeur exprimable en centaines de millisecondes : par exemple 200 ms ou 300 ms,
- et les durées aléatoires peuvent être comprises dans une plage Δ de l'ordre de quelques dizaines de millisecondes : par exemple une plage s'étendant entre 0 ms et (m x 10) ms, ou une plage s'étendant entre (- n x 10) ms et (+ n x 10) ms.

Un tel procédé de transmission consiste donc à réaliser un décalage temporel aléatoire entre les déclenchements successifs d'un signal de requête d'identification.

Selon ce principe, tel que représenté à la figure 2d prise en association avec les figures 2a et 2b, lorsqu'un « TOP » T d'émission d'un signal électromagnétique intervient alors que le boîtier électronique de la roue concernée est situé dans une zone de non réception, ce décalage temporel garantit rapidement qu'un futur Top T d'émission sera émis alors que le boîtier se trouve dans une zone de réception, et, par conséquent, garantit la réception par le dit boîtier d'un signal de requête d'identification et l'émission en retour par ce dernier de son code d'identification.

Les avantages de l'invention ressortent également de la l'analyse des figures 3a, 3b, 4a et 4b qui illustrent que, après quelques tours de roue :
- dans le cas d'une émission périodique Tp des signaux électromagnétiques (figures 2c, 3a et 3b), le nombre de points d'échantillonnage sur la périphérie de la roue est égal au nombre de déclenchements effectués durant un tour de roue,
- dans le cas d'une émission, conforme à l'invention (figures 2d, 4a et 4b), avec des intervalles de temps de durées aléatoires, les points d'échantillonnage sur la périphérie de la roue couvrent des zones angulaires de cette roue, c'est à dire des secteurs angulaires et non plus des points.

Ainsi, le procédé de transmission selon l'invention garantit une localisation rapide des roues d'un véhicule en utilisant, en vue de l'émission des signaux de requête d'identification, les antennes du dispositif d'accès mains libres équipant ce véhicule.

## Revendications

1. Procédé de transmission d'un signal électromagnétique de requête d'identification généré au moyen d'une antenne (11-14) connectée à une unité centrale (15) montée sur un véhicule (1), à destination d'un boîtier électronique (6-9) monté sur une roue (2-5) du dit véhicule, ce procédé de transmission consistant à émettre successivement, après démarrage du véhicule (1), une pluralité de signaux identiques (S1..., Si, Si+1,...) de requête d'identification, et le dit procédé de transmission **se caractérisant en ce qu'**il consiste à déclencher les signaux successifs avec des intervalles de temps présentant des durées variables établies par une méthode de détermination aléatoire.

2. Procédé de transmission selon la revendication 1, **caractérisé en ce que** l'on détermine les durées des intervalles de temps par un calcul aléatoire utilisant une variable dynamique comme variable de base du dit calcul aléatoire.

3. Procédé de transmission selon la revendication 1, **caractérisé en ce que** l'on détermine les durées des intervalles de temps par une méthode de calcul pseudo aléatoire consistant à choisir de façon aléatoire une valeur parmi un nombre prédéterminé de valeurs présélectionnées de durées.

4. Procédé de transmission selon l'une des revendications précédentes **caractérisé en ce que** l'on détermine les durées des intervalles de temps en ajoutant à une période de temps fixe prédéterminée une durée aléatoire établie par une méthode de détermination aléatoire.

## Claims

1. Method of transmitting an electromagnetic identification request signal generated by means of an antenna (11-14) connected to a central processing unit (15) mounted on a vehicle (1), intended for an electronic module (6-9) mounted on a wheel (2-5) of said Vehicle, this transmission method consisting in sending in succession, after the vehicle (1) is started up, a plurality of identical identification request signals (S1..., Si, Si+1,...), and **characterized in that** said transmission method consists in triggering the successive signals with time intervals having variable durations established by a random determination method.

2. Transmission method according to Claim 1, **characterized in that** the durations of the time intervals are determined by a random calculation using a dynamic variable as basic variable of said random calculation.

3. Transmission method according to Claim 1, **characterized in that** the durations of the time intervals are determined by a pseudo-random calculation method consisting in randomly choosing a value from a predetermined number of preselected duration values.

4. Transmission method according to one of the preceding claims, **characterized in that** the durations of the time intervals are determined by adding to a predetermined fixed time period a random duration established by a random determination method.

## Patentansprüche

1. Verfahren zur Übertragung eines elektromagnetischen Signals zur Identifikationsanforderung, das mittels einer Antenne (11-14) erzeugt wird, die mit einer auf einem Fahrzeug (1) angebrachten zentralen Einheit (15) verbunden ist, an ein elektronisches Gehäuse (6-9), das auf einem Rad (2-5) des Fahrzeugs angebracht ist, wobei dieses Verfahren daraus besteht, aufeinander folgend nach dem Anfahren des Fahrzeugs (1) eine Vielzahl von identischen (S1...., Si, Si+1,.....) Signale zur Identifikationsanforderung auszusenden, und das Verfahren zur Übertragung ist **dadurch gekennzeichnet, dass** es daraus besteht, die aufeinander folgenden Signale mit zeitlichen Abständen auszulösen, welche unterschiedliche, mittels eines Zufallsbestimmungsverfahrens ermittelte Längen aufweisen.

2. Verfahren zur Übertragung gemäß Anspruch 1, **dadurch gekennzeichnet dass** die Längen der zeitlichen Abstände durch eine Zufallsberechnung bestimmt werden, welche eine dynamische Variable als Basisvariable der Zufallsberechnung verwendet.

3. Verfahren zur Übertragung gemäß Anspruch 1, **dadurch gekennzeichnet dass** die Längen der zeitlichen Abstände durch eine Pseudo-Zufallsberechnung bestimmt werden, welche daraus besteht, auf zufällige Weise aus einer vorbestimmten Anzahl von im Voraus ausgewählten Längenwerteneinen Wert auszuwählen.

4. Verfahren zur Übertragung gemäß Anspruch 1, **dadurch gekennzeichnet dass** die Längen der zeitlichen Abstände bestimmt werden, indem einer feststehenden, im Voraus ausgewählten Zeitdauer eine zufällige, mit einem Zufallsbestimmungsverfahren ermittelte zeitliche Länge hinzu gefügt wird.
